# EUROPEAN PATENT SPECIFICATION

(11) **EP 4 515 654 B1**
(45) Date of publication and mention of the grant of the patent: **03.06.2026**
(21) Application number: 23724945.3
(22) Date of filing: 27.04.2023
(51) Int. Cl.: H02J 7/00, H02H 9/08, H02H 3/17

(54) **DEVICE FOR GENERATING A VIRTUAL NEUTRAL POINT**
VORRICHTUNG ZUR ERZEUGUNG EINES VIRTUELLEN NEUTRALPUNKTS
DISPOSITIF DE GÉNÉRATION DE POINT NEUTRE VIRTUEL

(30) Priority: 29.04.2022 IT 202200008606
(43) Date of publication of application: 05.03.2025
(73) Proprietor: Eldor Corporation S.p.A., 22030 Orsenigo (Como) (IT); Dr. Ing. h.c. F. Porsche AG, 70435 Stuttgart (DE)
(72) Inventor: FORTE, Pasquale, 22030 Orsenigo (Como) (IT); LISANTI, Paolo, 22030 Orsenigo (Como) (IT); BERTINO, Francesco, 22030 Orsenigo (Como) (IT)
(74) Representative: Zermani Biondi Orsi, Umberto
(86) International application number: PCT/IB2023/054360
(87) International publication number: WO 2023/209626

(56) References cited:
- EP-A1- 2 772 770
- EP-A1- 2 772 770
- CN-A- 102 778 636
- CN-A- 102 778 636
- DE-A1- 4 339 241
- DE-A1- 4 339 241
- GB-A- 2 578 339
- GB-A- 2 578 339

## Description

This invention relates to a device for generating a virtual neutral point. The main and preferred application of this invention is in the automotive field, in particular in the design and manufacture of charging systems for electric batteries.

In the context of electric vehicles, in fact, the battery pack charging mode is divided into two distinct macro-categories relating to: on-board chargers and ground chargers.

On-board chargers are, as their name suggests, integrated into the vehicle and include all the power and control electronics needed to convert the alternating current from the grid into the direct current needed to charge the battery pack.

On the other hand, 'ground' chargers are the well known 'columns' or wall boxes that directly perform the conversion by supplying the vehicle with direct current.

It is, therefore, clear that battery chargers of both categories, having to manage an alternating current coming from the grid and having to convert it into direct current for charging high-voltage batteries, have considerable criticalities in terms of user safety, as they must be equipped with appropriate protection systems.

Such protection systems are often linked to the need to verify the quality of the earthing of circuits (PEM), as well as the need to compensate for leakage currents in order to avoid an unwanted disabling of protection circuits (I-COMP); in most cases, these systems involve injecting a pre-set measurement or control signal, generally in low voltage, into the earth.

To do this, the circuits generating this voltage must be located between two nodes at different potentials, one of which is the earth.

In charging systems connected to grids with a neutral, the measurement or control signal is usually injected between the neutral node and the earth, which have very close, yet different potentials.

Disadvantageously, however, this is not possible in all those topologies where the charging socket is not directly connected to the neutral node.

A solution to this problem has been proposed by patent publication DE102020119106 that illustrates a circuit for generating a virtual neutral node connected to the grid connection terminals (i.e. to the phases, in the case of grids without a neutral) and configured to generate, at a node of the circuit, a point at a pre-set voltage close to the earth voltage.

Such a circuit consists of an active voltage divider that acts between the two end nodes connected to the phase terminals and, appropriately controlled, makes it possible to compensate for fluctuations in the neutral node by maintaining it at a constant voltage, close to the earth voltage as mentioned.

Disadvantageously, however, this solution is only efficient for grid configurations that guarantee either the presence of a neutral or a perfect balance between the two phase terminals; an example of such a configuration is the split-phase grid (or single-phase three-wires grid) in which the two phases are 180° out of phase and symmetrical with respect to the earth connection, thus making it possible to compensate both positive and negative imbalances of the virtual neutral node at any time by exploiting the voltage of the phase at a voltage opposite to the imbalance. Such a topology, however, is not capable of guaranteeing the voltage balancing of the virtual neutral point in unbalanced grids, such as, for example, three-phase grids with phase connection and earthed star point. Another example of this prior art is known from document DE4339241, showing a device for generating a virtual neutral point comprising two terminals and a virtual neutral terminal. Such a solution, however, is unable to compensate disturbances of the grid and therefore unsuitable to be used outside of a test environment.

It is, therefore, one purpose of this invention to provide a device for generating a virtual neutral point capable of overcoming the above-mentioned drawbacks of the prior art.

In particular, one purpose of this invention is to provide a device for generating a virtual neutral point that is highly versatile and efficient in all currently existing major grid configurations.

Said purposes are achieved with a device for generating a virtual neutral point that has the characteristics listed in one or more of the following claims.

In particular, said purposes are achieved with a device for generating a virtual neutral point comprising a first terminal, a second terminal, a third terminal and a control circuit.

The first terminal is connectable to (or capable of receiving) a first phase of a multi-phase power grid.

The second terminal is connectable to (or capable of receiving) a second phase or a neutral branch of said multi-phase power grid.

The third terminal is a virtual neutral terminal, interposed between said first terminal and said second terminal, connectable to an earth node and having a pre-set electrical potential. More precisely, the third terminal is preferably connected/connectable to low-voltage loads that are, in turn, connected to earth.

The control circuit is connected to the first, second and third terminal. Preferably, the control circuit is configured to maintain constant (thus, to control) a value of said third terminal electrical potential in response to a disturbance signal generated on said third terminal by a low voltage load (e.g. PEM or I-COMP) or by natural voltage variations in the grid. Preferably, the control circuit is configured to maintain the voltage of the third terminal around zero.

Preferably, the control circuit is provided with a storage stage connected to the first and second terminals.

The storage stage preferably comprises a first and a second storage device configured to store electrical charges until a positive peak voltage and a negative peak voltage are obtained.

The positive peak voltage (or positive saturation voltage) is reached in the first storage device.

The negative peak voltage (or negative saturation voltage) is reached in the second storage device.

The control circuit is preferably provided with a control stage operatively interposed between the storage stage and the third terminal.

Preferably, the control stage is configured to draw power from said first storage device or the second storage device.

Preferably, the control stage is configured:
- to draw energy (i.e. voltage) from said first storage device when the electrical potential of the third terminal falls below a reference value and/or
- to draw energy (i.e. voltage) from said second storage device when the electrical potential of the third terminal rises above a reference value. Preferably, the reference value is equal to the electrical potential of the earth node (i.e. essentially zero).

In other words, therefore, the control stage is configured to draw energy (i.e. voltage) from said first storage device when the electrical potential of the third terminal is positive and to draw energy (i.e. voltage) from said second storage device when the electrical potential of the third terminal is positive.

Advantageously, the presence of the storage stage equipped with devices capable of storing voltage with an opposite sign allows all types of disturbances on the virtual neutral to be compensated for, irrespective of the voltage level, phase shifting and phase balancing of the power grid.

This therefore makes the device universal; it can be connected with any power grid currently installed worldwide.

Further embodiments of the invention are defined in the dependent claims.

Further features and advantages of this invention will become clearer from the indicative, and therefore non-limiting, description of a preferred, but not exclusive, embodiment of a device for generating a virtual neutral point as illustrated in the accompanying drawings:
- Figure 1 schematically shows the circuit structure of a device for generating a virtual neutral point according to this invention, in a first embodiment;
- Figure 2 schematically shows the circuit structure of a device for generating a virtual neutral point according to this invention, in a second embodiment.

With reference to the appended figures, a device for generating a virtual neutral point is generically identified with the reference number 1, preferably to be installed inside an automotive battery charger device (not illustrated).

The term "charger device" is used in this text to generically define any charging system for a traction battery pack capable of connecting to the alternating current power grid and converting it to direct current before supplying power to the battery.

The device 1 is configured to be connected to a connection socket 9 of the power grid G.

The power grid G can be of any kind, either single-phase or multi-phase.

In the case of a single-phase grid, the device 1 is configured to connect to one phase of the grid and to a neutral node of the grid.

In the case of a multi-phase grid, the device 1 is configured to connect to at least two phases of the grid G, which have a pre-set phase shift.

The device 1 is also connectable to one or more low-voltage loads that utilise the virtual neutral node generated by it.

Examples of such loads may be devices for measuring an earth resistance PEM or leakage current compensation circuits I-COMP, which usually have current generators that inject a current signal between the neutral node and earth.

Thus, the device 1 comprises a first 2, a second 3 and a third terminal 4. The first terminal 2 is connectable to a first phase V1 of the power grid G. The second terminal 3 is connectable to a second phase V2 or to a neutral branch of said power grid G.

The third terminal 4, or virtual neutral terminal, is interposed between the first terminal 2 and the second terminal 3 and is connectable, in use, to an earth node PE.

This third terminal 4 preferably has a pre-set electrical potential; more preferably, this pre-set electrical potential is close to the electrical potential of the earth node PE.

Typically, the value of the neutral node is quantified at about 3 to 8 volts; however, the device of the invention is configured to generate a virtual neutral node with zero voltage with respect to the earth.

In this regard, according to one aspect of the invention, the device 1 comprises a control circuit 5 connected to the first 2, the second 3 and the third terminal 4.

The control circuit 5 is configured to maintain a constant value of said electrical potential of the third terminal 4 in response to a disturbance signal generated on said third terminal 4 by a low voltage load L or by natural grid variations.

It should be noted that the expression "maintain constant" is understood in this text to mean that the control circuit 5 is intended to control the electrical potential of the third terminal 4 so that this is kept at least around the previously mentioned pre-set value, more preferably around zero. Preferably, the control circuit 5 comprises at least one storage stage 6. More preferably, the control circuit 5 also comprises a control stage 9 operatively interposed between the storage stage 6 and the third terminal 4.

The storage stage 6 is connected to the first 2 and the second terminal 3 and is provided with a first 7a and a second storage device 7b.

The first 7a and the second storage device 7b are configured to store electrical charges until a positive peak voltage and a negative peak voltage are obtained in the first storage device 7a and the second storage device 7b, respectively.

Preferably, the peak voltage corresponds to the maximum voltage value of the first V1 and the second V2 phases of the grid, respectively, being of storage devices connected thereto by means of the first 2 and the second terminal 3.

Preferably, the storage stage 6 comprises a bridge formed from two capacitors 7a, 7b arranged in parallel to respective diodes 8.

The capacitors, corresponding to the first storage device 7a and the second storage device 7b respectively, are configured to store charges from the first 2 and the second terminal 3 until the positive peak voltage and the negative peak voltage are obtained, respectively.

In the preferred embodiment, the storage stage 6 comprises a first parallel branch 6a on which said capacitors 7a, 7b are placed and a second parallel branch 6b on which said diodes 8 are placed.

The first parallel branch 6a has a first central node 11 interposed between the two capacitors 7a, 7b and connected to the first terminal 2.

The second parallel branch 6b has a second central node 12 interposed between the two diodes 8 and connected to said second terminal 3.

The control stage 9 is configured to control the storage stage 6 in charging and discharging depending on both the disturbance signal on the third terminal 3 and the grid conditions, i.e. the voltage values of the phases. Preferably, the control stage 9 is configured to control the storage stage 6 to draw power from said first storage device 7a when the electrical potential of the third terminal 4 falls below zero (earth value) and to draw power from said second storage device 7b when said electrical potential of the third terminal 4 rises above zero (earth value).

In other words, when natural grid variations or disturbances generated by the low-voltage loads L to which it is connected vary the potential of the third terminal 4 by shifting its value from the reference value, which is assumed to be equal to the earth value (i.e. basically zero)

Preferably, the control stage 9 comprises a third branch 9a, of control, arranged in parallel to said first branch 6a and second branch 6b of the storage stage 6 and provided with triggering devices 10 for triggering a discharge of said capacitors 7a, 7b.

Preferably, moreover, wherein the third branch 9a comprises a third central node 13 interposed between the two triggering devices 10 and connected to said third terminal 4.

These triggering devices 10 are selectively switchable according to a sign of the voltage on the third terminal 4 between a charging condition, in which they allow one or both capacitors 7a, 7b to be charged, and a discharging condition, in which they allow one of the capacitors 7a, 7b, preferably the one with a peak voltage of the opposite sign with respect to the disturbance signal, to be discharged.

Preferably, therefore, the device comprises a control unit (not illustrated) configured to alternately and selectively control the triggering devices 10 to continuously control the electrical potential of the third terminal 4, maintaining it at the reference value.

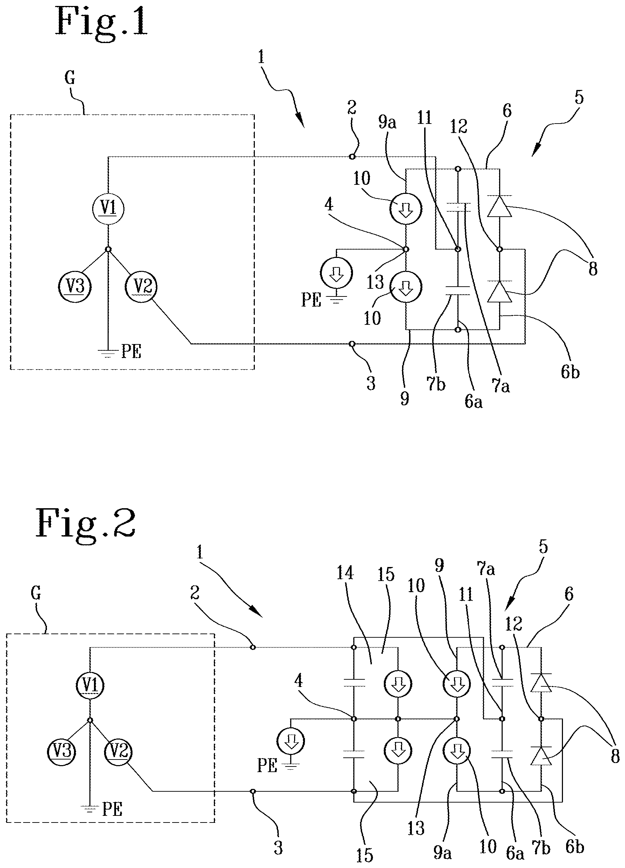

According to a variant of this invention, illustrated in Figure 2, the control circuit 5 comprises a balancing stage 14 operatively arranged in parallel with the storage stage 6.

The balancing stage comprises two compensation branches 15 respectively connected to the first 2 and the second terminal 3 and able to be selectively triggered to draw voltage from the terminal with voltage of the opposite sign with respect to the disturbance signal.

In the preferred embodiment, each compensation branch 15 comprises a capacitor and a current generator that can be selectively triggered to enable the voltage required to compensate for the disturbance signal on the third terminal to be drawn from the respective phase, i.e. from the respective first 2 or second terminal 3.

The storage stage 6 and the balancing stage 14 may operate simultaneously or alternatively, depending on the boundary conditions of the system and the grid.

The invention achieves the intended purposes and achieves important advantages.

In fact, a storage circuit connected to the third node makes it possible to maintain the operation of the compensation even in the absence of balanced grids, making the device universal and suitable for any application in any geographical area.

## Claims

1. A device for generating a virtual neutral point, comprising:
- a first terminal (2) connectable to a first phase (V1) of a power grid (G);
- a second terminal (3) connectable to a second phase (V2) or to a neutral branch of said power grid (G);
- a third, virtual neutral terminal (4) interposed between said first terminal (2) and said second terminal (3), connectable to an earth node (PE) and having a pre-set electrical potential;
**characterised in that** it comprises a control circuit (5) connected to the first (2), second (3) and third (4) terminals and configured to maintain a constant value of said electrical potential of the third terminal (4) in response to a disturbance signal generated on said third terminal (4) by a low voltage load (L) or to a variation of the grid voltage; said control circuit (5) being provided with:
- a storage stage (6) connected to the first (2) and to the second (3) terminals and provided with a first (7a) and a second storage device (7b) configured to store electrical charges until a positive peak voltage and a negative peak voltage are obtained in the first storage device (7a) and the second storage device (7b), respectively;
- a control stage (9) operatively interposed between the storage stage (6) and the third terminal (4) and configured for:
- drawing energy from said first storage device (7a) when the electrical potential of the third terminal (4) falls below a reference value;
- drawing energy from said second storage device (7b) when the electrical potential of the third terminal (4) rises above a reference value.

2. The device for generating a virtual neutral point according to claim 1, wherein said reference value is substantially equal to an earth potential, generating a zero voltage between the third terminal (4) and the earth node (PE).

3. The device for generating a virtual neutral point according to claim 1 or 2, wherein the storage stage (6) of the control circuit (5) comprises a bridge formed by two capacitors (7a, 7b) arranged in parallel with respective diodes (8) and configured to store charges from the first (2) and second (3) terminals until said positive peak voltage and said negative peak voltage are obtained, respectively; said capacitors (7a, 7b) corresponding to the first storage device (7a) and the second storage device (7b), respectively.

4. The device for generating a virtual neutral point according to claim 3, wherein said storage stage (6) of the control circuit (5) comprises a first, parallel branch (6a) on which said capacitors (7a, 7b) are located and a second, parallel branch (6b) on which said diodes (8) are located; said first parallel branch (6a) having a first central node (11), interposed between the two capacitors (7a, 7b) and connected to said first terminal (2), and said second parallel branch (6b) having a second central node (12), interposed between the two diodes (8) and connected to said second terminal (3).

5. The device for generating a virtual neutral point according to claim 3 or 4, wherein the control stage (9) of the control circuit (5) comprises a third, control branch (9a), arranged in parallel with said first branch (6a) and said second branch (6b) of the storage stage (6) and provided with triggering devices (10) for triggering a discharge of said capacitors (7a, 7b) which can be selectively switched according to the sign of the disturbance signal on the third terminal (4).

6. The device for generating a virtual neutral point according to claim 5, wherein the third branch (9a) comprises a third central node (13), interposed between the two triggering devices (10) and connected to said third terminal (4).

7. The device for generating a virtual neutral point according to any one of the preceding claims, wherein the control circuit (5) comprises a balancing stage (14) operatively arranged in parallel with the storage stage (6) and comprising two compensation branches (15), which are associated with the first (2) and the second (3) terminals, respectively, and can be selectively activated to draw voltage from the terminal having an opposite voltage sign with respect to the disturbance signal.

8. An on-board battery charger, comprising a device for generating a virtual neutral point according to any one of the preceding claims.

## Patentansprüche

1. Vorrichtung zur Erzeugung eines virtuellen Neutralpunkts, umfassend:
- einen ersten Anschluss (2), der mit einer ersten Phase (V1) eines Stromnetzes (G) verbunden werden kann;
- einen zweiten Anschluss (3), der mit einer zweiten Phase (V2) oder einem neutralen Zweig des Stromnetzes (G) verbunden werden kann;
- einen dritten, virtuellen neutralen Anschluss (4), der zwischen dem ersten Anschluss (2) und dem zweiten Anschluss (3) eingefügt ist, der mit einem Erdungsknoten (PE) verbunden werden kann und ein voreingestelltes elektrisches Potenzial aufweist;
**dadurch gekennzeichnet, dass** sie eine Steuerschaltung (5) umfasst, die mit dem ersten (2), zweiten (3) und dritten (4) Anschluss verbunden und dazu ausgelegt ist, einen konstanten Wert des elektrischen Potentials des dritten Anschlusses (4) als Reaktion auf ein Störsignal, das an dem dritten Anschluss (4) durch eine Niederspannungslast (L) erzeugt wird, oder auf eine Änderung der Netzspannung aufrechtzuerhalten; wobei die Steuerschaltung (5) versehen ist mit:
- einer Speicherstufe (6), die mit dem ersten (2) und dem zweiten (3) Anschluss verbunden und mit einer ersten (7a) und einer zweiten Speichervorrichtung (7b) versehen ist, die dazu ausgelegt sind, elektrische Ladungen zu speichern, bis in der ersten Speichervorrichtung (7a) bzw. der zweiten Speichervorrichtung (7b) eine positive Spitzenspannung und eine negative Spitzenspannung erhalten werden;
- eine Steuerstufe (9), die betriebswirksam zwischen der Speicherstufe (6) und dem dritten Anschluss (4) eingefügt und zu Folgendem ausgelegt ist:
- Entnehmen von Energie aus der ersten Speichervorrichtung (7a), wenn das elektrische Potenzial des dritten Anschlusses (4) unter einen Referenzwert fällt;
- Entnehmen von Energie aus der zweiten Speichervorrichtung (7b), wenn das elektrische Potential des dritten Anschlusses (4) über einen Referenzwert ansteigt.

2. Vorrichtung zur Erzeugung eines virtuellen Neutralpunkts nach Anspruch 1, wobei der Referenzwert im Wesentlichen gleich einem Erdpotential ist, wobei eine Nullspannung zwischen dem dritten Anschluss (4) und dem Erdungsknoten (PE) erzeugt wird.

3. Vorrichtung zur Erzeugung eines virtuellen Neutralpunkts nach Anspruch 1 oder 2, wobei die Speicherstufe (6) der Steuerschaltung (5) eine Brücke umfasst, die durch zwei Kondensatoren (7a, 7b) gebildet wird, die parallel zu jeweiligen Dioden (8) angeordnet und dazu ausgelegt sind, Ladungen von dem ersten (2) und dem zweiten (3) Anschluss zu speichern, bis die positive Spitzenspannung bzw. die negative Spitzenspannung erhalten werden; wobei die Kondensatoren (7a, 7b) der ersten Speichervorrichtung (7a) bzw. der zweiten Speichervorrichtung (7b) entsprechen.

4. Vorrichtung zur Erzeugung eines virtuellen Neutralpunkts nach Anspruch 3, wobei die Speicherstufe (6) der Steuerschaltung (5) einen ersten, parallelen Zweig (6a), an dem sich die Kondensatoren (7a, 7b) befinden, und einen zweiten, parallelen Zweig (6b), an dem sich die Dioden (8) befinden, umfasst; wobei der erste, parallele Zweig (6a) einen ersten, zentralen Knoten (11) aufweist, der zwischen den zwei Kondensatoren (7a, 7b) eingefügt und mit dem ersten Anschluss (2) verbunden ist, und wobei der zweite, parallele Zweig (6b) einen zweiten, zentralen Knoten (12) aufweist, der zwischen den beiden Dioden (8) eingefügt und mit dem zweiten Anschluss (3) verbunden ist.

5. Vorrichtung zur Erzeugung eines virtuellen Neutralpunkts nach Anspruch 3 oder 4, wobei die Steuerstufe (9) der Steuerschaltung (5) einen dritten Steuerzweig (9a) umfasst, der parallel zu dem ersten Zweig (6a) und dem zweiten Zweig (6b) der Speicherstufe (6) angeordnet und mit Auslösevorrichtungen (10) zum Auslösen einer Entladung der Kondensatoren (7a, 7b) versehen ist, die entsprechend dem Vorzeichen des Störsignals an dem dritten Anschluss (4) selektiv geschaltet werden können.

6. Vorrichtung zur Erzeugung eines virtuellen Neutralpunkts nach Anspruch 5, wobei der dritte Zweig (9a) einen dritten, zentralen Knoten (13) umfasst, der zwischen den zwei Auslösevorrichtungen (10) eingefügt und mit dem dritten Anschluss (4) verbunden ist.

7. Vorrichtung zur Erzeugung eines virtuellen Neutralpunkts nach einem der vorhergehenden Ansprüche, wobei die Steuerschaltung (5) eine Ausgleichstufe (14) umfasst, die betriebswirksam parallel zur Speicherstufe (6) angeordnet ist und zwei Kompensationszweige (15) umfasst, die jeweils mit dem ersten (2) und dem zweiten (3) Anschluss assoziiert sind und selektiv aktiviert werden können, um Spannung von dem Anschluss mit einem entgegengesetzten Spannungsvorzeichen in Bezug auf das Störsignal zu entnehmen.

8. Bordbatterieladegerät, umfassend eine Vorrichtung zur Erzeugung eines virtuellen Neutralpunkts nach einem der vorhergehenden Ansprüche.

## Revendications

1. Dispositif de génération de point neutre virtuel, comprenant :
- une première borne (2) pouvant être connectée à une première phase (V1) d'un réseau électrique (G) ;
- une deuxième borne (3) pouvant être connectée à une seconde phase (V2) ou à une branche neutre dudit réseau électrique (G) ;
- une troisième borne neutre virtuelle (4), interposée entre ladite première borne (2) et ladite deuxième borne (3), pouvant être connectée à un nœud de terre (PE) et présentant un potentiel électrique prédéfini ;
**caractérisé en ce qu'**il comprend un circuit de commande (5) connecté aux première (2), deuxième (3) et troisième (4) bornes et configuré pour maintenir une valeur constante dudit potentiel électrique de la troisième borne (4) en réponse à un signal de perturbation généré sur ladite troisième borne (4) par une charge basse tension (L) ou à une variation de la tension de réseau ; ledit circuit de commande (5) étant pourvu :
- d'un étage de stockage (6) connecté aux première (2) et deuxième (3) bornes et pourvu d'un premier (7a) et d'un second dispositif de stockage (7b) configurés pour stocker des charges électriques jusqu'à ce qu'une tension de crête positive et une tension de crête négative soient obtenues respectivement dans le premier dispositif de stockage (7a) et le second dispositif de stockage (7b) ;
- d'un étage de commande (9) intercalé de manière fonctionnelle entre l'étage de stockage (6) et la troisième borne (4) et configuré pour :
- tirer de l'énergie dudit premier dispositif de stockage (7a) lorsque le potentiel électrique de la troisième borne (4) descend en dessous d'une valeur de référence ;
- tirer de l'énergie dudit second dispositif de stockage (7b) lorsque le potentiel électrique de la troisième borne (4) dépasse une valeur de référence.

2. Dispositif de génération de point neutre virtuel selon la revendication 1, dans lequel ladite valeur de référence est sensiblement égale à un potentiel de la terre, générant une tension nulle entre la troisième borne (4) et le nœud de terre (PE).

3. Dispositif de génération de point neutre virtuel selon la revendication 1 ou 2, dans lequel l'étage de stockage (6) du circuit de commande (5) comprend un pont formé de deux condensateurs (7a, 7b) disposés en parallèle avec des diodes respectives (8) et configurés pour stocker des charges provenant des première (2) et deuxième (3) bornes jusqu'à ce que ladite tension de crête positive et ladite tension de crête négative soient obtenues, respectivement ; lesdits condensateurs (7a, 7b) correspondant, respectivement, au premier dispositif de stockage (7a) et au second dispositif de stockage (7b).

4. Dispositif de génération de point neutre virtuel selon la revendication 3, dans lequel ledit étage de stockage (6) du circuit de commande (5) comprend une première branche parallèle (6a) sur laquelle sont situés lesdits condensateurs (7a, 7b) et une deuxième branche parallèle (6b) sur laquelle sont situées lesdites diodes (8) ; ladite première branche parallèle (6a) comportant un premier nœud central (11), intercalé entre les deux condensateurs (7a, 7b) et connecté à ladite première borne (2), et ladite deuxième branche parallèle (6b) comportant un deuxième nœud central (12), intercalé entre les deux diodes (8) et connecté à ladite deuxième borne (3).

5. Dispositif de génération de point neutre virtuel selon la revendication 3 ou 4, dans lequel l'étage de commande (9) du circuit de commande (5) comprend une troisième branche de commande (9a), disposée en parallèle avec ladite première branche (6a) et ladite deuxième branche (6b) de l'étage de stockage (6) et pourvue de dispositifs de déclenchement (10) pour déclencher une décharge desdits condensateurs (7a, 7b) qui peuvent être commutés de manière sélective selon le signe du signal de perturbation sur la troisième borne (4).

6. Dispositif de génération de point neutre virtuel selon la revendication 5, dans lequel la troisième branche (9a) comprend un troisième nœud central (13), intercalé entre les deux dispositifs de déclenchement (10) et connecté à ladite troisième borne (4).

7. Dispositif de génération de point neutre virtuel selon l'une quelconque des revendications précédentes, dans lequel le circuit de commande (5) comprend un étage d'équilibrage (14) disposé de manière fonctionnelle en parallèle avec l'étage de stockage (6) et comprenant deux branches de compensation (15), qui sont associées respectivement aux première (2) et deuxième (3) bornes, et peuvent être activées de manière sélective pour tirer de la tension de la borne présentant un signe de tension opposé par rapport au signal de perturbation.

8. Chargeur de batterie embarqué, comprenant un dispositif de génération de point neutre virtuel selon l'une quelconque des revendications précédentes.
